(19)

Europäisches
Patentamt
European
Patent Office
Office européen
des brevets

(11) **EP 1 806 750 A1**

(12) **EUROPEAN PATENT APPLICATION**

(43) Date of publication:
**11.07.2007 Bulletin 2007/28**

(51) Int Cl.:
*G11B 27/36* (2006.01)    *H04N 5/76* (2006.01)
*H04L 12/28* (2006.01)

(21) Application number: **06127278.7**

(22) Date of filing: **28.12.2006**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: **10.01.2006 JP 2006002680**

(71) Applicant: **KABUSHIKI KAISHA TOSHIBA
Tokyo 105-8001 (JP)**

(72) Inventors:
• **Konda, Kazunobu
c/o Toshiba Corporation, IPD,
Tokyo 105-8001 (JP)**
• **Ohkita, Hideki
c/o Toshiba Corporation, IPD,
Tokyo 105-8001 (JP)**

(74) Representative: **Henkel, Feiler & Hänzel
Patentanwälte
Maximiliansplatz 21
80333 München (DE)**

(54) **Network apparatus with recording bit rate monitoring**

(57) According to one embodiment, there is disclosed a network apparatus (1-1) making an information exchange with other apparatus (1-20) on a network. A communication unit (1-2) makes a communication with the other apparatus (1-20) via the network. A data storage (1-9) stores data. A recording bit rate measuring unit (1-8) measures as a recording bit rate a decreasing amount per unit time of a residual capacity of the data storage (1-9). A recording bit rate monitor (1-7) monitors the recording bit rate as a state variable, determines whether or not the state variable changes based on a predetermined reference, and outputs an event issue request if it is determined that the state variable changes. An event processor (1-6) sends an event notification showing a state change from the communication unit (1-2) to the other apparatus (1-20) based on the event issue request from the recording bit rate monitor (1-7).

FIG.1

**Description**

The present invention relates to a network apparatus, which makes an information exchange with other apparatus arranged on a network.

In order to record data, various proposals have been conventionally made to detect recordable residual capacity in a recorder. For example, Jpn. Pat. Appln. KOKAI Publication No. 2005-6199 discloses the following data recorder. The disclosed data recorder can grasp recordable residual capacity of a recording medium in a coding process with variable bit rate according to user's request. Moreover, Jpn. Pat. Appln. KOKAI Publication No. 11-328937 discloses the following signal recorder. The disclosed signal can display information relevant to the residual capacity of a recording medium during the recording with variable bit rate. Moreover, Jpn. Pat. Appln. KOKAI Publication No. 2002-33982 discloses the following image recorder. The disclosed image recorder calculates the residual capacity of a hard disk in executing the recording reservation when user sets the recording of programs stored in the hard disk in advance. If there is a possibility that the recording reservation is not made, the image recorder displays the information that there is the possibility of incapable of making the recording reservation.

According to a first aspect of the present invention, there is provided a network apparatus making an information exchange with other apparatus on a network, characterized by comprising:

communication unit which makes a communication with the other apparatus via the network;
a data storage which stores data;
a recording bit rate measuring unit which measures as a recording bit rate a decreasing amount per unit time of a residual capacity of the data storage;
a recording bit rate monitor which monitors the recording bit rate measured by the recording bit rate measuring unit as a state variable, determines whether or not the state variable changes based on a predetermined reference, and outputs an event issue request if it is determined that the state variable changes; and
an event processor which sends an event notification showing a state change from the communication unit to the other apparatus based on the event issue request from the recording bit rate monitor.

According to a second aspect of the present invention, there is provided a network apparatus making an information exchange with other apparatus on a network, characterized by comprising:

an event processor which makes an event issue with respect to the other apparatus, and receives an event notification from the other apparatus;
a data storage which stores data;

a transmitter which transmits the data stored in the data storage to other apparatus;
a data transmitter which instructs a start of data transmission and an end of data transmission from the transmitter to the other apparatus; and
a recording bit rate interpreter which detects a change of the recording bit rate of the other apparatus based on an event notification from the other apparatus, and predicts whether or not data transmission to the other apparatus by the data transmitter is completed.

According to a third aspect of the present invention, there is provided a data recording method characterized by comprising:

storing data in a data storage;
measuring by a recording bit rate measuring unit a decreasing amount per unit time of a residual capacity of the data storage as a recording bit rate;
monitoring by a recording bit rate monitor the bit recording bit rate measured by the recording bit rate measuring unit as a state variable, determining whether or not the state variable changes based on a predetermined reference, and outputting an event issue request if it is determined that the state variable changes; and
sending by an event processor an event notification showing a state change from the communication unit to the other apparatus based on the event issue request from the recording bit rate monitor.

The invention can be more fully understood from the following detailed description when taken in conjunction with the accompanying drawings, in which:

FIG. 1 is an exemplary block diagram schematically showing the configuration of a recorder according to a first embodiment of the present invention;
FIG. 2 is an exemplary flowchart to explain the operation of a recording bit rate monitor 1-7;
FIG. 3 is an exemplary view showing the definition in service description of a state variable expressing a recording bit rate;
FIG. 4 is an exemplary view showing a state change notification format;
FIG. 5 is an exemplary block diagram schematically showing the configuration of a recorder according to a second embodiment of the present invention;
FIG. 6 is an exemplary view showing one example of Service Description according to the second embodiment;
FIG. 7 is an exemplary flowchart to explain in detail a Gap value setup action;
FIG. 8 is an exemplary view showing one example of ServiceDescription of ContentDirectoryService;
FIG. 9 is an exemplary view showing a response HTTP body of an X_GetCurrentRecordingBitrate action;

FIG. 10 is an exemplary block diagram schematically showing the configuration of a recorder according to a fourth embodiment of the present invention;

FIG. 11 is an exemplary view showing one example of property expressing a recording bit rate;

FIG. 12 is an exemplary block diagram schematically showing the configuration of a client corresponding to the recorder of the first embodiment;

FIG. 13 is an exemplary flowchart to explain the operation of the client 1-20 shown in FIG. 12;

FIG. 14 is an exemplary block diagram schematically showing the configuration of a client corresponding to the recorder of the second to fourth embodiments;

FIG. 15 is an exemplary flowchart to explain the operation of the client 1-20 corresponding to the recorder of the first embodiment; and

FIG. 16 is an exemplary flowchart to explain the operation of the client 1-20 corresponding to the recorder of the fourth embodiment.

Various embodiments according to the invention will be described hereinafter with reference to the accompanying drawings.

Here, the case of applying the present invention to Universal Plug and Play (hereinafter, referred to as UPnP) will be explained. In these embodiments, event, action and so on are handled according to a XML format conformable to UPnP standard.

(First embodiment)

The first embodiment will be schematically described below. According to the first embodiment, there is provided a recording bit rate measuring unit. The recording bit rate measuring unit measures as recording bit rate a decreasing amount per unit time of the residual capacity of a content storage such as HDD. Then, the unit sends the calculated recording bit rate to a recording bit rate monitor. The recording bit rate monitor stores the recording bit rate as an UPnP state variable. If the recording bit rate changes, the recording bit rate monitor gives instructions to issue a change notification to an event processor.

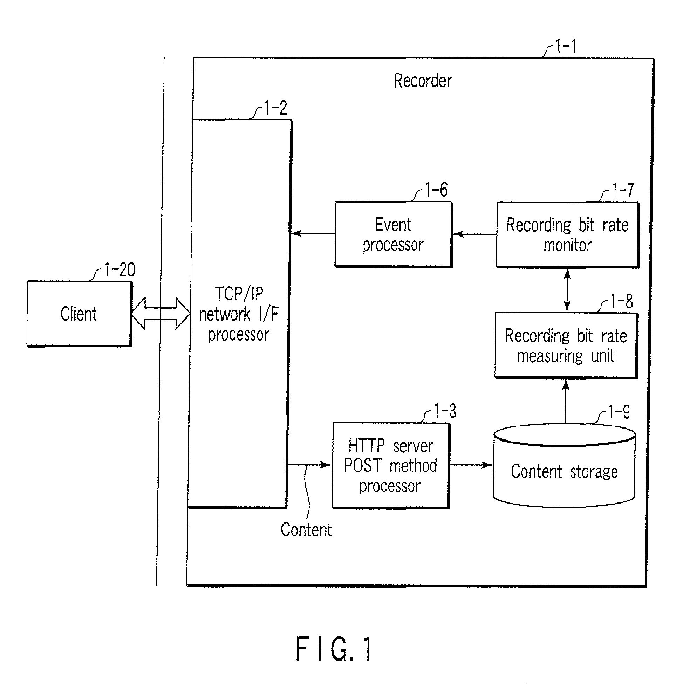

The first embodiment will be described in detail hereinafter with reference to the accompanying drawings. FIG. 1 is a block diagram schematically showing the configuration of a recorder according to the first embodiment of the present invention.

The recorder 1-1 of this embodiment has a TCP/IP network I/F processor 1-2 for making information exchange with other apparatus (i.e., client 1-20 in FIG. 1). In addition, the recorder 1-1 includes an event processor 1-6 for issuing an UPnP event. On the other hand, the recorder 1-1 includes an HTTP server POST method processor 1-3 for receiving content transfer from the client 1-20, and a content storage 1-9 for storing the received content. Moreover, the recorder 1-1 of this embodiment includes a recording bit rate monitor 1-7 and a recording bit rate measuring unit 1-8. The recording bit rate monitor 1-7 monitors a bit rate during the recording, and gives instructions to issue an UPnP event to the event processor 1-6 if a change is detected. The recording bit rate measuring unit 1-8 measures the residual capacity of the content storage 1-9, that is, a decreasing amount per unit time.

The recorder 1-1 of this embodiment has a built-in UPnP AV MediaServer device, and defines a state variable for storing recording bit rate in ServiceDescription of Content Directory Service.

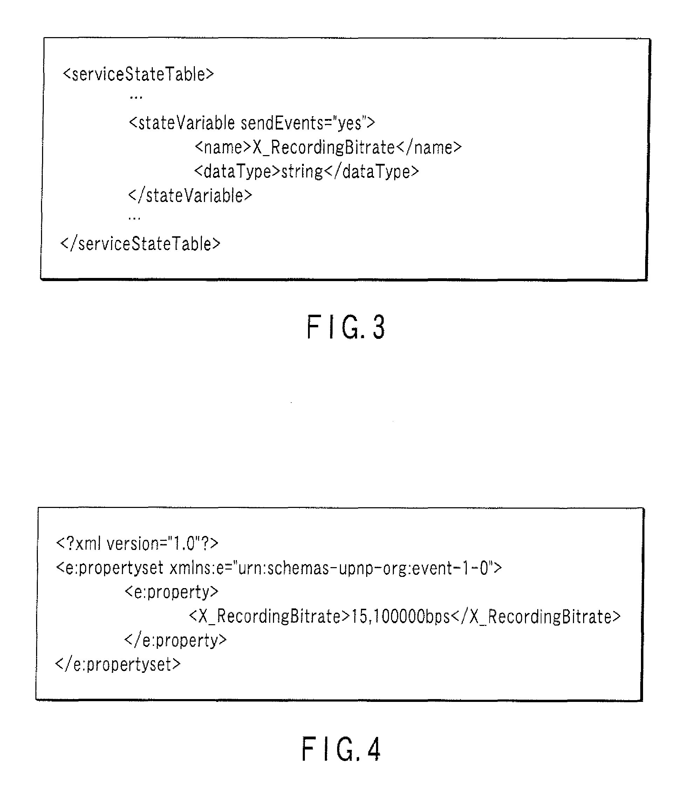

FIG. 3 is a view showing the definition in service description of a state variable expressing a recording bit rate. In the service description shown in FIG. 3, a state variable having a name such as X_RecordingBitrate is described as a string type, that is, dataType. According to the state variable, event is send-able (sendEvents = "yes").

In this case, the event send-able means the following matter. Specifically, when receiving an event issue request from the client 1-20, if the state variable changes, it is possible that event notification for notifying it is sent to the client 1-20.

In other words, according to the first embodiment, the recording bit rate of the recorder 1-1 is stored in the state variable such as X_RecordingBitrate as string data. Further, when receiving an event issue request from the client 1-20, the recorder 1-1 sends a recording bit rate changed as event notification to the client 1-20 if the recording bit rate changes thereafter.

The recording bit rate measuring unit 1-8 always calculates the residual capacity of the content storage 1-9, that is, a decreasing amount per unit time. Then, the unit 1-8 gives information on the calculated result to the recording bit rate monitor 1-7. If recording is not made with respect to the content storage 1-9, the decreasing rate of the residual capacity is 0. For this reason, the recording bit rate measuring unit 1-8 continues to notify information "0" to the recording bit rate monitor 1-7.

The following case will be described below; specifically, content recording is started with respect to the content storage 1-9 from the HTTP server POST method processor 1-3. In this case, the recording bit rate measuring unit 1-8 acquires the residual capacity of the content storage 1-9 with predetermined interval to measure a decreasing amount per unit time.

For instance, the recording bit rate measuring unit 1-8 reads the residual capacity of the content storage 1-9 every 0.5 seconds. Using the unit time as one second and using unit of capacity as bit, the units 1-8 calculates the decreasing amount of the residual capacity as bit per second (bps). Then, the unit 1-8 notifies the decreasing rate of the residual capacity to the recording bit rate monitor 1-7 using bps as the unit every 0.5 seconds.

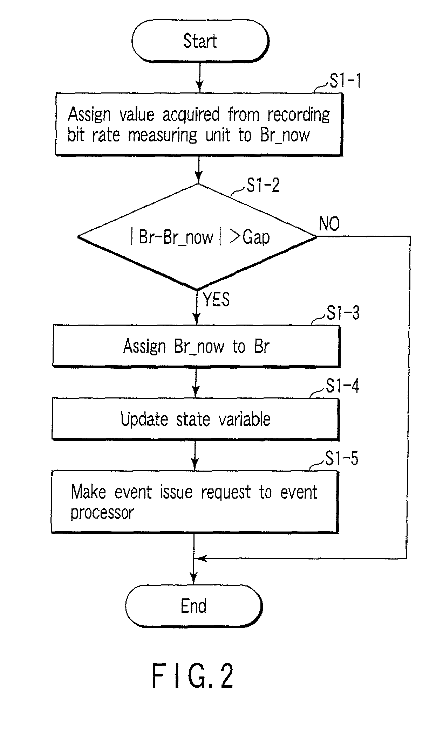

The operation of the recording bit rate monitor 1-7 will explained with reference to a flowchart of FIG. 2. FIG. 2 is a flowchart to explain the operation of the recording bit rate monitor 1-7.

First, when booting, the recording bit rate monitor 1-7 initializes (not shown) variables Br, Br_now and a value Gap. The variable Br stores a recording bit rate as a state variable. The variable Br_now stores the current recording bit rate. The Gap is a value used to make a comparison with an absolute value of the difference between Br and Br_now. When receiving the current recording bit rate from the recording bit rate measuring unit 1-8, the recording bit rate monitor 1-7 assigns the value acquired from the unit 1-8 to Br_now (step S1-1).

Then, the recording bit rate monitor 1-7 makes a comparison whether or not the absolute value of the difference between Br and Br now is larger than Gap given as a reference value (S1-2). For example, the Gap value is preset as 100k bps (100,000 bps). In this case, if the absolute value of the difference between Br and Br_now exceeds 100k bps, the procedure flow proceeds to step S1-3. On the other hand, if the case other than above is given, the procedure flow ends. For instance, if Br = 1,000,000 bps and Br_now = 1,500,000 bps, the difference absolute value is 500,000 bps. The foregoing value 500,000 bps is larger than the Gap value, that is, 100,000 bps; therefore, the procedure flow proceeds to step S1-3. In other words, if the change of the recording bit rate is less than the Gap value, no event notification is given to client 1-20. If the change exceeds the gap value, even notification is given.

The recording bit rate monitor 1-7 assigns the Br_now value to Br, and then, records it (step S1-3). Then, the recording bit rate monitor 1-7 updates a state variable (step S1-4). For example, the state variable is recorded as string type in a sate of combining a value dividing the Br value by Gap and the Gap value. Here, Br is 1,500,000 bps while Gap is 100,000; therefore, "15,1000000 bps" is recorded as the state variable value.

The recording bit rate monitor 1-7 makes an event issue request to the event processor 1-6 together with the updated state variable value (step S1-5).

The event processor 1-6 gives a state change notification to a subscribing device based on the event issue request from the recording bit rate monitor 1-7. FIG. 4 shows one example of a state change notification format. In FIG. 4, there is shown only HTTP body of a HTTP message transmitted by the event processor 1-6 via GENA (General Event Notification Architecture).

In the HTTP body shown in FIG. 4, the whole recording bit rate of the content storage 1-9 is described only; however, the present invention is not limited to this expression. For example, the state variable may be calculated every container managed via CDS (Content Directory Service). In this case, in step S1-2, Br is calculated every container, and the state variable is expressed in a state of combined with each container ID. For instance, individual state variables of container ID = HDD0 and container ID = HDD1 are calculated; as a result, a value 0.15 is given. Thus, a state variable such as "0.100000 bps, HDD0 and 15,100000 bps HDD1" is given. As described above, the state variable may be expressed in combined with the container ID.

The first embodiment has been described on the premise that the recording capacity changes by content transmission from the client 1-20 via HTTP POST request. This embodiment is also applicable to the case where the residual capacity of the recording capacity changes by the reservation recording in the recorder 1-1.

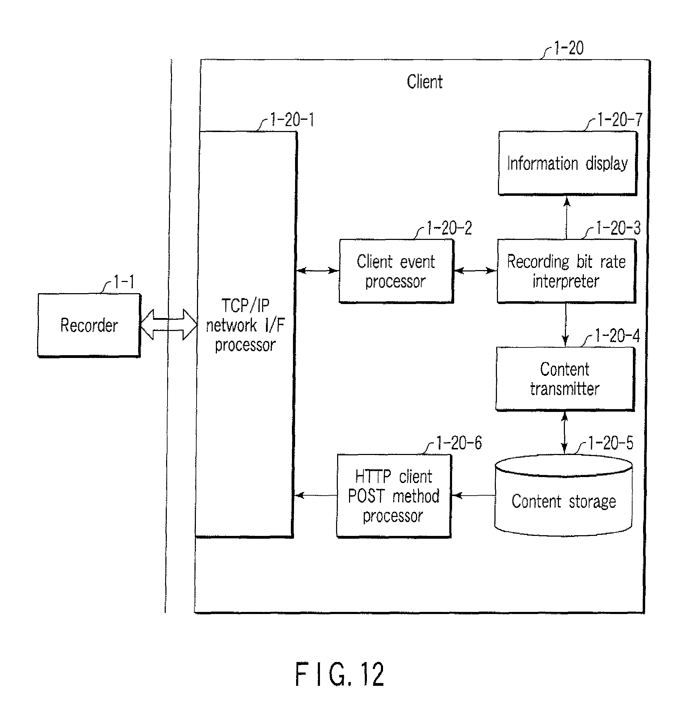

FIG. 12 is a block diagram schematically showing the configuration of the client 1-20 corresponding to the recorder 1-1 of the first embodiment. The client 1-20 has a TCP/IP network I/f processor 1-20-1 for making an information exchange with other apparatus (recorder 1-1 in FIG. 1). Moreover, the client 1-20 includes a client event processor 1-20-2. The client event processor 1-20-2 makes a request of event issue to the recorder 1-1 (Subscribe processing) and receives an event notification from the recorder 1-1.

The client 1-20 further includes a recording bit rate interpreter 1-20-3. The recording bit rate interpreter 1-20-3 makes a request of event issue to the client event processor 1-20-2, and instructs a content transmitter 1-20-4 to transmit contents. Moreover, the recording bit rate interpreter 1-20-3 interprets a change of the recording bit rate via event notification from the recorder 1-1. Then, the interpreter 1-20-3 gives instructions to display a caution screen for user to information display 1-20-7. In addition, the interpreter 1-20-3 gives instructions to stop content transmission to the content transmitter 1-20-4.

The content transmitter 1-20-4 instructs transmission start and transmission end to the recorder 1-1 of contents stored in a content storage 1-20-5. An HTTP client POST method processor 1-20-6 issues an HTTP POST method to the recorder 1-1 according to the instruction from the content storage 1-20-5. Thus, the contents stored in a content storage 1-20-5 are transmitted.

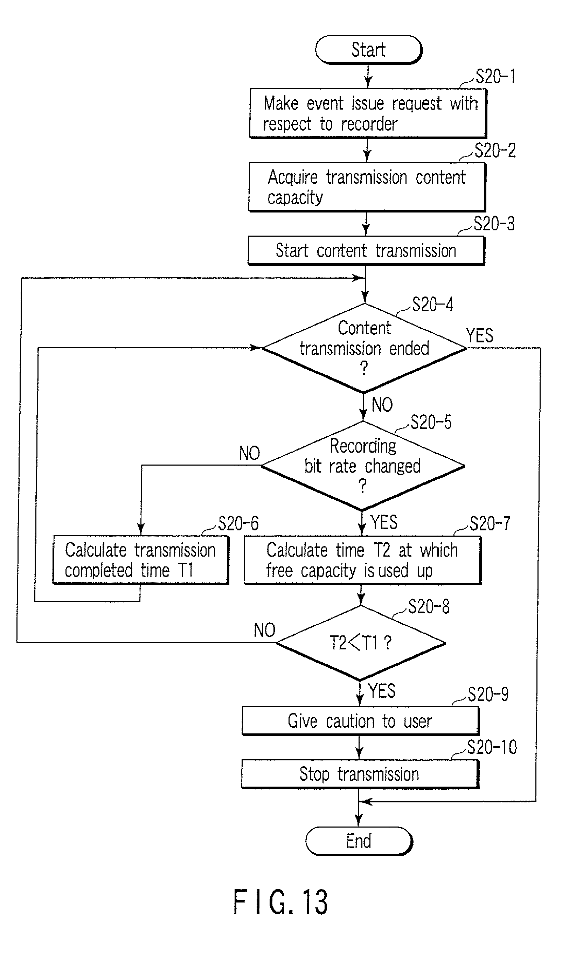

The operation of the client 1-20 having the foregoing configuration will be descried below with reference to a flowchart of FIG. 13. FIG. 13 is a flowchart to explain the operation of the client 1-20.

The client 1-20 acquires the residual capacity R0 of the recorder 1-1 via an UPnP CDS (Content Directory Service) action, and sets it to the recording bit rate interpreter 1-20-3 (not shown).

According to the instruction from the recording bit rate interpreter 1-20-3, the client event processor 1-20-3 sends an event issue request to the recorder 1-1 (step S20-1). The sent event issue request is notification to the client 1-20 (event notification). In this case, a change of state variable of the recorder 1-1, that is, a change of the recording bit rate is given as an event.

Then, the recording bit rate interpreter 1-20-3 acquires a content capacity S0 (bit unit size) transmitted from the content storage 1-20-5 (step S20-2). The interpreter 1-20-3 gives instructions to transmit the content to the content transmitter 1-20-4 (step S20-3). The recording bit rate interpreter 1-20-3 further determines whether or not the content is all transferred, and then, content transmission ends (step S20-4). If the content transmission ends, the procedure ends.

On the other hand, if the content transmission does not end, the recording bit rate interpreter 1-20-3 further determines whether or not the recording bit rate of the recorder 1-1 changes (step S20-5). In step S20-5, determination is made based on the recording bit rate notified via the event from the recorder 1-1. Specifically, determination is made whether or not event notification that the recording bit rate from the recorder 1-1 changes is received between previous and current determinations in S20-4. If the determined result of step S20-5 is NO, content transmission completed predictive end time T1 is calculated (step S20-6). The predictive end time T1 is calculated from transmission data S1 (bit unit size) completed so far, content transmission elapsed time Tm (second) and recording bit rate. Thereafter, the procedure flow returns to step S20-4.

On the contrary, if the determined result of step S20-5 is YES, a currently predictive free capacity Rm (bit unit size) is calculated. The currently predictive free capacity Rm is calculated from a free capacity R0 (bit unit size) acquired at transmission start and transmission completed data S1 (bit unit size). Then, free capacity losing time T2 (second) is calculated from a newly acquired recording bit rate B1 (unit: bps, bps is an abbreviation of bit per sec, and expresses the number of bits per unit second) and the predictive free capacity Rm (step S20-7).

For example, the transmission completed predictive time T1 (second) is calculated from the following equation.

$$T1 = (Tm/S1) * (S0 - S1)$$

Moreover, the predictive free capacity Rm is calculated from the following equation.

$$Rm = R0 - S1$$

Therefore, the free capacity losing time T2 is calculated from the following equation.

$$T2 = Rm / B1$$

The recording bit rate interpreter 1-20-3 determines whether or not T2 is smaller than T1 (step S20-8). If T2 is smaller than T1, it is anticipated that the free capacity of the recorder is lost before transmission is completed; for this reason, the procedure flow proceeds to step S20-9.

The recording bit rate interpreter 1-20-3 gives caution that free capacity is lost before transmission is completed to user using the information display 1-20-7 (step S20-9). Mores specifically, the interpreter 1-20-3 gives instructions to display a window showing caution a display screen (not shown) to the information display 1-20-7. The foregoing caution is given, and thereafter, the interpreter 1-20-3 gives instructions to stop content transmission to the content transmitter 1-20-4 (step 20-10). The transmission stop described in step S20-10 is automatically carried out in this embodiment. In this case, the transmission stop may be carried out according to user's instructions receiving caution.

According to the foregoing first embodiment, the recording bit rate monitor monitors a decreasing amount per unit time of the residual capacity of the content storage. Then, the monitor compares the decreasing amount with the Gap value to instruct even issue. By doing so, a state change notification is given to client based on a proper reference. Therefore, the client readily predicts the time that the storage capacity of the recorder is used up.

(Second embodiment)

The second embodiment will be briefly described below. According to the second embodiment, a SOAP action is added. The SOAP action is used for setting a Gap value (e.g., 1K bps or 10K bps), which is stored in the recording bit rate monitor and used as a reference notifying a change of state variable. According to an action request from the client, the reference, that is, Gap value is changed. If the reference is changed, the monitor changes the stored state value into a newly designated reference, and then, makes a request of change notification issue to the event processor. The second embodiment will be described in detail below with reference to the accompanying drawings.

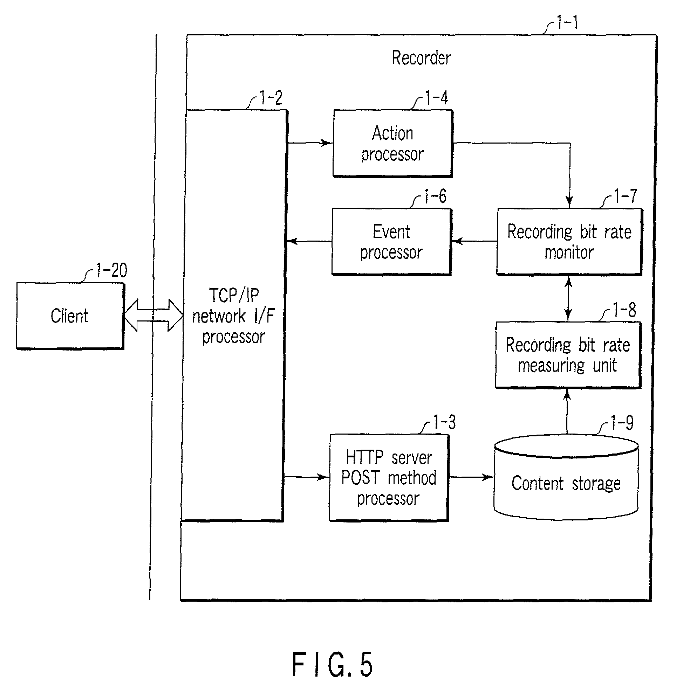

FIG. 5 is a block diagram schematically showing the configuration of a recorder according to a second embodiment of the present invention. The recorder 1-1 of this embodiment has a TCP/IP network I/F processor 1-2 for making information exchange with other apparatus (client 1-20 in FIG. 5). Moreover, the recorder 1-1 includes an event processor 1-6 for issuing an UPnP event, and an action processor 1-4 for handling an UPnP action.

On the other hand, the recorder includes an HTTP server POST method processor 1-3 for receiving contents transferred from other apparatus, and a content storage 1-9 for storing contents. Moreover, the recorder 1-1 of this embodiment includes a recording bit rate monitor 1-7 and a recording bit rate measuring unit 1-8. The recording bit rate monitor 1-7 monitors a bit rate during the recording, and gives instructions to issue an UPnP event to the event processor if a change is detected. The recording bit rate measuring unit 1-8 measures a decreasing amount per unit time of the residual capacity of the content storage 1-9.

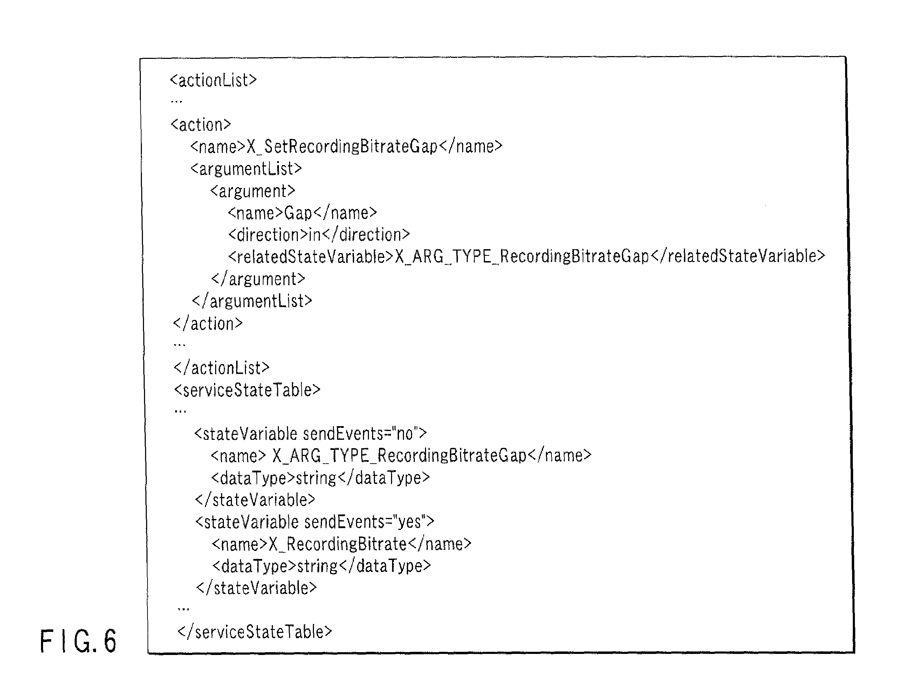

The recorder of this embodiment has a built-in UPnP AV MediaServer device. The following definitions shown in FIG. 6 are given to ServiceDescription of ContentDirectoryService. One is an action definition for setting Gap used as a reference when a change of recording bit rate is compared. Another is a state variable definition related to an argument used for the set action. Another is a state variable definition for storing recording bit rate.

In the ServiceDescription of FIG. 6, a name action such as X_SetRecodingBitrateGap is defined. According the action, input (direction, in) of Gap name and variable (argument) are give when receiving the action. The foregoing action is given, and thereby, a state variable (relatedStateVariable), that is, X_ARG_TYPE_RecordingBitrateGap is changed. In other words, a Gap value is changed.

According to the state variable X_ARG_TYPE_RecordingBitrateGap, no event is sent (sendEvents = "no"), and dataType is stored as string type. According to the foregoing sendEvents = "no", even if the state variable is changed, event notification is not issued to the client.

On the other hand, the service description has also a state variable such as sendEvents = "yes" X-RecordingBitrateGap showing a recording bit rate value. This is the same as the first embodiment; therefore, the explanation is omitted.

As seen from FIG. 5, the second embodiment differs from the first embodiment that the action processor 1-4 for setting the Gap value used when making a comparison with a change of bit rate is added.

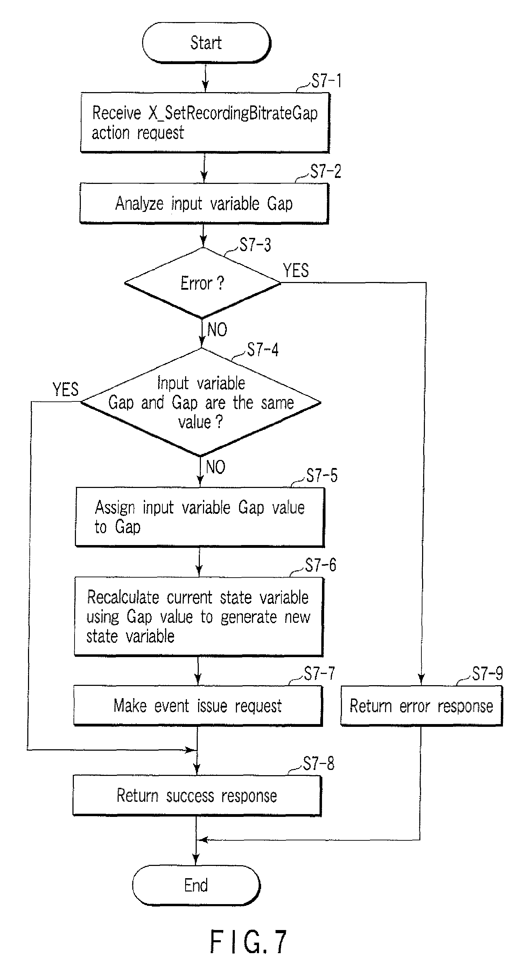

The operation of the recorder 1-1 when the X_SetRecodingBitrateGap action shown in FIG. 6 is called from the client 1-20 will be explained below with reference to FIG. 7.

The action processor 1-4 receives an X_SetRecodingBitrateGap action request from the client 1-20 (step S7-1). An input variable of the X-SetRecodingBitrateGap action, that is, Gap value is analyzed (step S7-2). Then, the action processor 1-4 determines whether or not an error such as format error exists (step S7-3). If the error exists, the TCP/IP network I/F processor 1-2 returns an error response (step S7-9), and thereafter, the procedure flow ends.

Conversely, if no error exists, the action processor 1-4 compares a value of the input variable Gap of the X_SetRecodingBitrateGap with a Gap value used for state variable calculation in the recording bit rate monitor 1-7 (step S7-4). If the Gap value is the same, the action processor 1-4 returns a success response (step S7-8), and then, the procedure flow ends. If the input variable Gap value differs from the Gap value used for state variable calculation, the action processor 1-4 assigns the input variable Gap value to Gap (step S7-5).

For example, the Gap value is 100,000 bps (bps is an abbreviation of bit per sec, and expresses the number of bits per unit second). In this case, if the value of the input variable Gap of the X_SetRecodingBitrateGap is 500,000 bps, the Gap value is set to 500,000 bps.

The recording bit rate monitor 1-7 recalculates the state variable value based on the newly set Gap value (step S7-6). For instance, if Br = 1,500,000 bps, the monitor acquires a new state variable "3,500000 bps" ("3" is a value obtained from diving 1,500,000 by the Gap value 500,000) based on the newly set Gap value 500,000 bps, and then, records it.

The action processor 1-4 makes an event issue request to the event processor 1-6 based on the newly calculated state variable value (step S7-7). Thereafter, the action processor 1-4 issues a success response (step S7-8), and then, the procedure ends.

The recording bit rate monitor 1-7 monitors recording bit rate and issues an event according to the procedure shown in the flowchart of FIG. 2 using the Gap value set via the flowchart of FIG. 7.

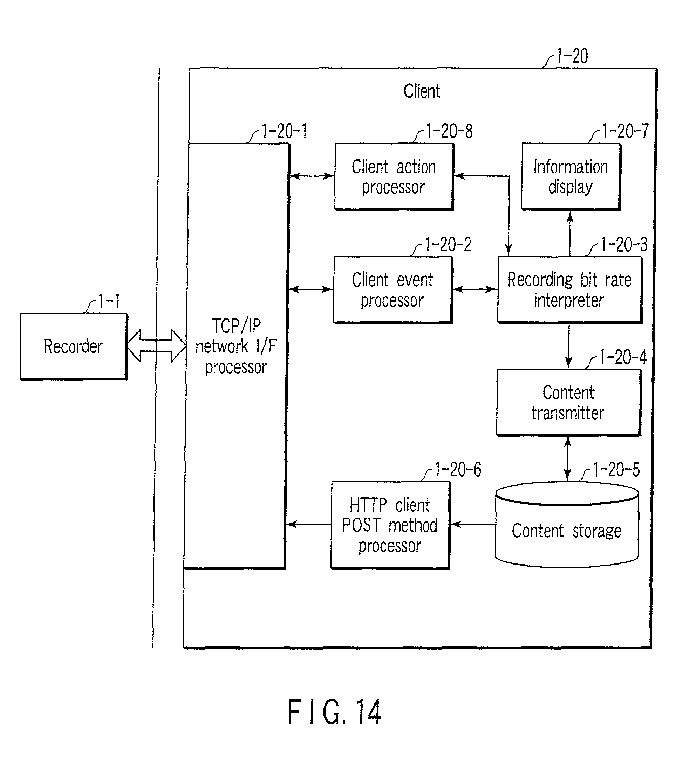

FIG. 14 is a block diagram schematically showing the configuration of the client 1-20 corresponding to the recorder 1-1 of the second embodiment. The client 1-20 of FIG. 14 has a client action processor 1-20-8. The X_SetRecodingBitrateGap action disclosed by the recorder 1-1 is called via the client action processor 1-20-8, thereby changing a gap value.

The flow of the procedure of acquiring a recording bit rate via event notification is the same as the first embodiment (FIG. 13); therefore, the explanation is omitted.

According to the second embodiment, the action processor 1-4 of the recorder 1-1 sets the Gap value from the client 1-20. Therefore, the client 1-20 can set a reference of a bit rate when monitoring the bit rate. By doing so, the client 1-20 accurately predicts the time that the storage capacity of the recorder 1-1 is used up.

(Third embodiment)

According to the third embodiment, an action for acquiring a current state variable value is added. The current state variable value is returned according to an action request from a client. The third embodiment will be described in detail below with reference to the accompanying drawings.

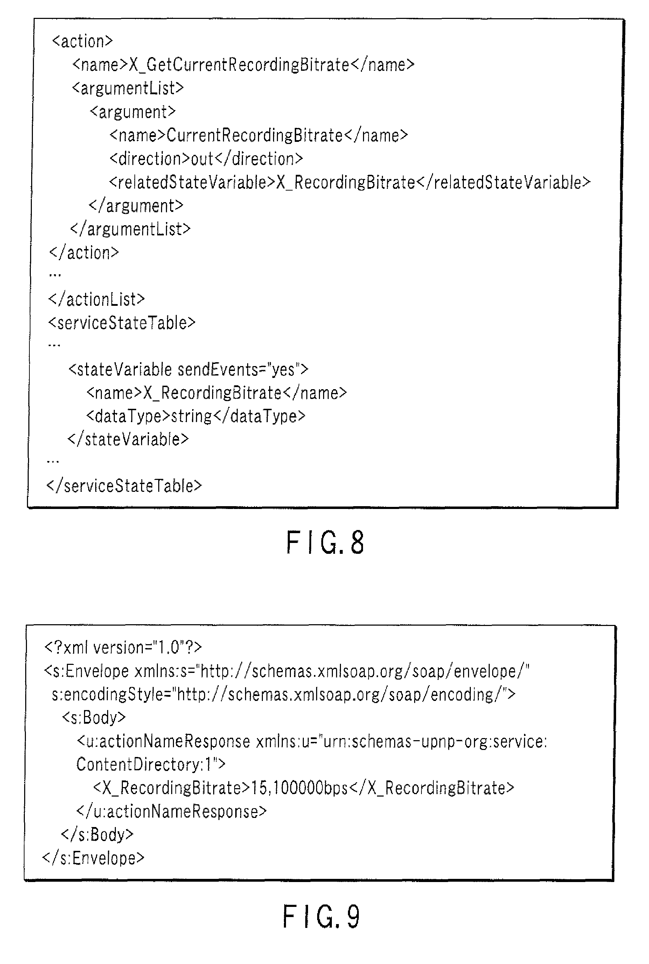

The recorder 1-1 of the third embodiment has the same configuration as shown in FIG. 5. However, the action processor 1-4 has a different function. FIG. 8 shows one example of ServiceDescription of ContentDirectoryService of the third embodiment. In ServiceDescription of FIG. 8, an action having name such as X_GetCurrentRecordingBitrate is defined. The X_GetCurrentRecordingBitrate action has an output (direction, out) of name such as CurrentRecordingBitrate and a variable (argument). In the CurrentRecordingBitrate, a recording bit rate state variable (relatedStateVariable), that is, X_RecordingBitrate value is inputted. In other words, the client sends a CurrentRecordingBitrate action, and thereby, can acquire a recording bit rate value as a return value (output variable).

Specifically, the ServiceDescription of FIG. 8 defines an action of acquiring a state variable value showing a current recording bit rate. When receiving X_GetCurrentRecordingBitrate action, the action processor 1-4 of FIG. 5 acquires a state variable value of a current recording bit rate from the recording bit rate monitor 1-7, and then, returns the value as a response.

FIG. 9 shows an HTTP body of the response returned by the action processor 1-4 with respect to the X_GetCurrentRecordingBitrate action. The return value, that is, X_RecordingBitrate value is "15,100000 bps"; therefore, a Gap value is 100000 bps. The recording bit rate Br is 100000 x 15 = 1,500,000 bps. This "bps" is an abbreviation of bit per sec, and expresses the number of bits per unit second.

The block diagram of the client 1-20 corresponding to the recorder 1-1 of the third embodiment is the same as shown in FIG. 14; therefore, the explanation is omitted.

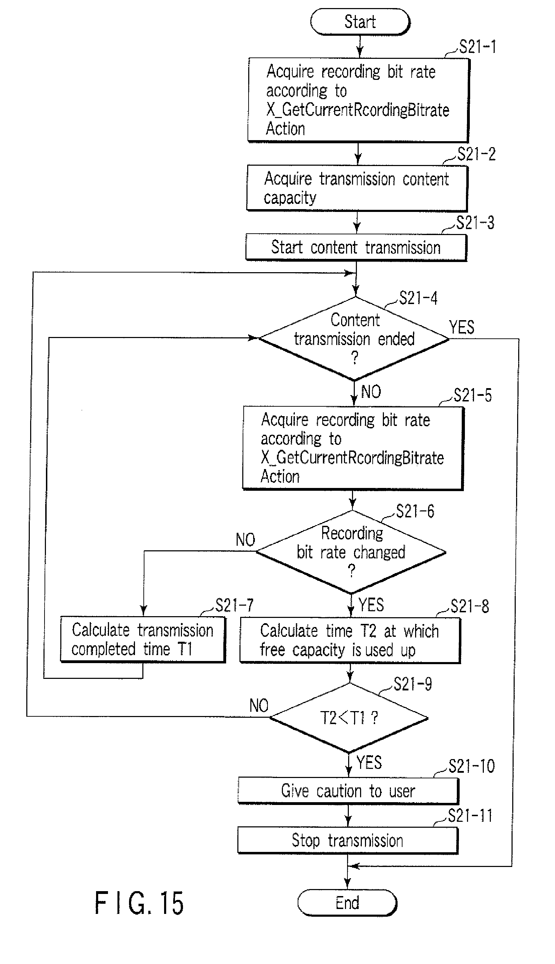

The operation of the client will be explained below with reference to a flowchart of FIG. 15. The client 1-20 acquires the residual capacity R0 of the recorder 1-1 according to an UPnP CDS: Browse Action, and then, sets it to the recording bit rate interpreter 1-20-3 (not shown). According to the instructions from the interpreter 1-20-3, the client action processor 1-20-8 makes an X_GetCurrentRecordingBitrate action issue request with respect to the recorder 1-1 to acquire a current recording bit rate (Step S21-1).

The recording bit rate interpreter 1-20-3 acquires a transmission content capacity S0 (bit unit size) from the content storage 1-20-5 (step S21-2). The interpreter 1-20-3 gives instructions to transmit the acquired content to the content transmitter 1-20-4 (step S21-3). Thereafter, the interpreter 1-20-3 determines whether or not the content is all transferred and content transmission is completed (step S21-4). If the content transmission is completed, the procedure ends.

If the content transmission is not completed, the client action processor 1-20-8 sends the foregoing X_GetCurrentRecordingBitrate action to the recorder 1-1 according to the instructions from the interpreter 1-20-3 (step S21-5). The recording bit rate interpreter 1-20-3 determines whether or not the recording bit rate changes (step S21-6). If the determined result in step S21-6 is NO, predictive end tie T1 (second) is calculated from a currently transmitted data S1 and content transmission elapsed time (second) (step S21-7). Thereafter, the flow returns to step S20-4.

On the contrary, if the determined result of step S20-6 is YES, a currently predictive free capacity Rm (bit unit size) is calculated. The currently predictive free capacity Rm is calculated from a free capacity R0 (bit unit size) acquired at transmission start and transmission completed data S1 (bit unit size). Then, free capacity losing time T2 (second) is calculated from a newly acquired recording bit rate B1 (unit: bps) and the predictive free capacity Rm (step S20-8).

For example, the transmission completed predictive time T1 is calculated from the following equation.

$$T1 = (Tm/S1) * (S0 - S1)$$

Moreover, the predictive free capacity Rm is calculated from the following equation.

$$Rm = R0 - S1$$

Therefore, the free capacity losing time T2 is calculated from the following equation.

$$T2 = Rm / B1$$

The recording bit rate interpreter 1-20-3 determines whether or not T2 is smaller than T1 (step S20-9). If T2 is smaller than T1, it is anticipated that the free capacity of the recorder is lost before transmission is completed; for this reason, the procedure flow proceeds to step S20-10.

The recording bit rate interpreter 1-20-3 gives caution that free capacity is lost before transmission is completed to user using the information display 1-20-7 (step S20-10). The foregoing caution is given, and thereafter, the interpreter 1-20-3 gives instructions to stop content transmission to the content transmitter 1-20-4 (step 20-11). The transmission stop described in step S20-11 is automatically carried out in this embodiment. In this case, the transmission stop may be carried out according to user's instructions receiving caution. In step S21-5, the following method may be employed; specifically, the recording bit rate may be acquired after predetermined time elapsed.

According to the third embodiment, the action processor 1-4 acquires a state variable showing the current bit rate value from the client 1-20. Therefore, the client can always acquire the recording bit rate value if necessary.

(Fourth embodiment)

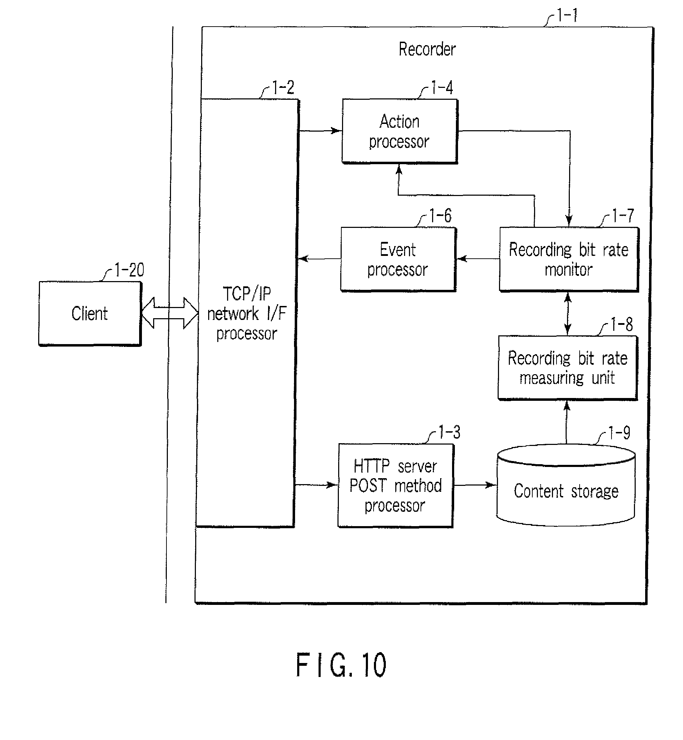

FIG. 10 is a block diagram schematically showing the configuration of a recorder according to a fourth embodiment of the present invention. The operation of the recorder will be described below with reference to the block diagram.

The recorder 1-1 of this embodiment has a TCP/IP network I/F processor 1-2 for making an information exchange with other apparatus (client 1-20 in FIG. 10). Moreover, the recorder 1-1 includes an event processor 1-6 for issuing an UPnP event, and an action processor 1-4 for handling an UPnP action. On the other hand, the recorder 1-1 includes an HTTP server POST method processor 1-3 for receiving contents transferred from other apparatus, and a content storage 1-9 for storing contents.

Moreover, the recorder 1-1 of this embodiment includes a recording bit rate monitor 1-7 and a recording bit rate measuring unit 1-8. The recording bit rate monitor 1-7 monitors a bit rate during the recording, and gives instructions to issue an UPnP event to the event processor if a change is detected. The recording bit rate measuring unit 1-8 measures a decreasing amount per unit time of the residual capacity of the content storage 1-9.

The action processor 1-4 of this embodiment differs from the second and third embodiments in that it has the following function. Specifically, the action processor 1-4 has a function of returning a current recording bit rate value as property with respect to CDS: Browse request in addition to the following actions. One is an action of setting a Gap value of the recording bit rate of the second and third embodiments. Another is an action of acquiring a current recording bit rate.

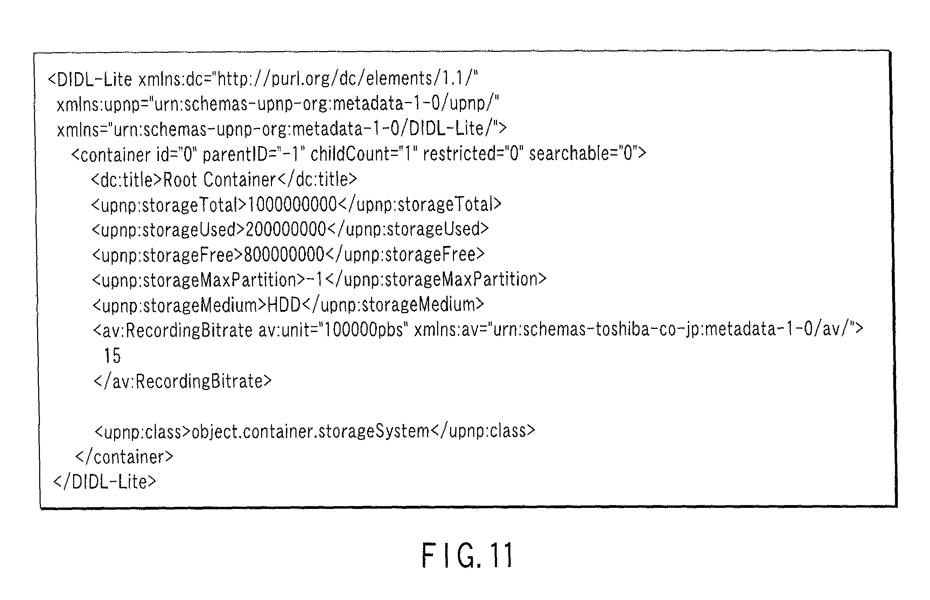

FIG. 11 shows one example of property expressing a recording bit rate. In other words, FIG. 11 is an example of CDS: Browse result with respect to a root container managed by CDS. In this example, av: RecordingBitrate element is expressed as property showing a current bit rate, a current Gap value is expressed using av: unit attribute. Moreover, xmlns: av = "urn: schemas-toshiba-co-jp: metadata-1-0/av/" is used as a name space of xml

FIG. 11 shows an example that the total capacity is 1,000,000,000 Bytes, and the free capacity is 800,000,000 Bytes. Incidentally, the av: RecrodingBitrate element may be added to only root container or each container. When receiving CDS: browse request, the action processor 1-4 acquires a current recording bit rate and gap value from the recording bit rate monitor 1-7. Then, the action processor 1-4 generates the property shown in FIG. 11 from the acquired value, and thereafter, generates a CDS: browse response result output variable to return a response.

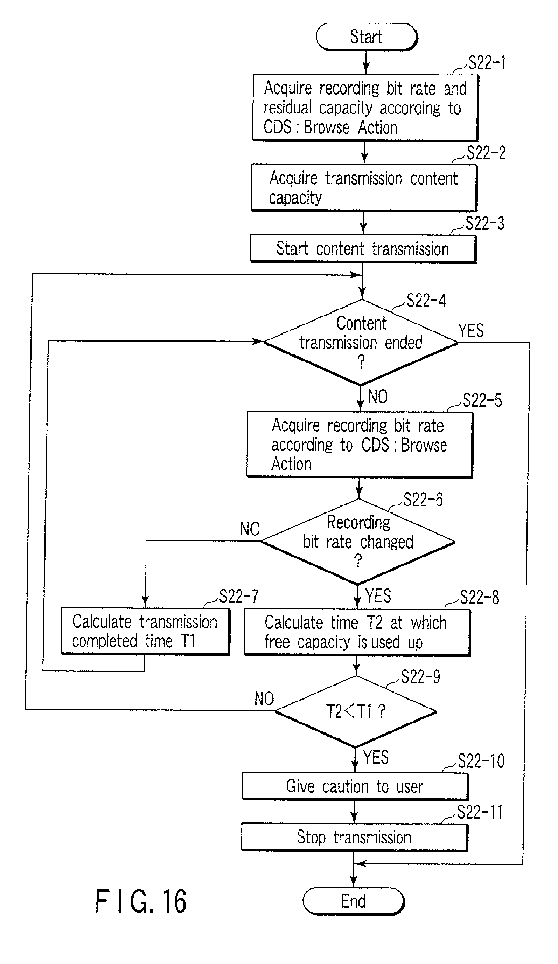

The block diagram of the client 1-20 corresponding to the recorder of the fourth embodiment is the same as shown in FIG. 14; therefore, the explanation is omitted. FIG. 16 is a flowchart to explain the operation of the client 1-20 according this embodiment.

The operation of the client 1-20 will be explained below with reference to the flowchart of FIG. 16. In the client 1-20, the client action processor 1-20-8 makes a CDS: Browse action issue request with respect to the recorder 1-1 according to the instructions from the recording bit rate interpreter 1-20-3. By doing so, the client action processor 1-20-8 acquires a current recording bit rate and free capacity (step S22-1). In this case, the unit of the free capacity according to the CDS: browse action is Byte; therefore, it is converted into a unit of bit.

The recording bit rate interpreter 1-20-3 acquires transmission content capacity S0 (size) from the content storage 1-20-5 (step S22-2). The interpreter 1-20-3 gives instructions to transmit the content to the content transmitter 1-20-4 (step S22-3).

Thereafter, the recording bit rate interpreter 1-20-3 determines whether or not the content is all transferred and the content transmission is completed (step S22-4). If the content transmission is completed, the procedure ends. If the content transmission is not completed, the interpreter 1-20-3 acquires a current recording bit rate according to the CDS: browse action (step S22-5). Then, the interpreter 1-20-3 determines whether or not the recording bit rate changes (step S22-6). If the determined result in step S22-6 is NO, predictive end tie T1 (second) is calculated from a currently transmitted data S1 and content transmission elapsed time (second) (step S22-7). Thereafter, the flow returns to step S22-4.

On the contrary, if the determined result of step S22-6 is YES, a currently predictive free capacity Rm (bit unit size) is calculated. The currently predictive free capacity Rm is calculated from a free capacity R0 (bit unit size) acquired at transmission start and transmission completed data S1 (bit unit size). Then, free capacity losing time T2 (second) is calculated from a newly acquired recording bit rate B1 (unit: bps) and the predictive free capacity Rm (step S22-8).

For example, the transmission completed predictive time T1 is calculated from the following equation.

$$T1 = (Tm/S1) * (S0 - S1)$$

Moreover, the predictive free capacity Rm is calculated from the following equation.

$$Rm = R0 - S1$$

Therefore, the free capacity losing time T2 is calculated from the following equation.

$$T2 = Rm / B1$$

The recording bit rate interpreter 1-20-3 determines whether or not T2 is smaller than T1 (step S22-9). If T2 is smaller than T1, it is anticipated that the free capacity of the recorder is lost before transmission is completed; for this reason, the procedure flow proceeds to step S20-10.

In step S22-10, the recording bit rate interpreter 1-20-3 gives caution that free capacity is lost before transmission is completed to user using the information display 1-20-7. The foregoing caution is given, and thereafter, the interpreter 1-20-3 gives instructions to stop content transmission to the content transmitter 1-20-4 (step 22-11). The transmission stop described in step S22-11 is automatically carried out in this embodiment. In this case, the transmission stop may be carried out according to user's instructions receiving caution. In step S22-5, the following method may be employed; specifically, the recording bit rate may be acquired after predetermined time elapsed.

According to the fourth embodiment, the recording bit rate is defined as the property of UPnP. By doing so, even if the recorder 1-1 having different recording capacity every container is given, a recording rate is acquired with respect to individual recorders. Therefore, the client 1-20 issues CDS: browse, thereby acquiring the residual capacity and the recording bit rate via one-time action. This serves to reduce the number of command issues.

**Claims**

1. A network apparatus (1-1) making an information exchange with other apparatus (1-20) on a network, **characterized by** comprising:

   communication unit (1-2) which makes a communication with the other apparatus via the network;
   a data storage (1-9) which stores data;
   a recording bit rate measuring unit (1-8) which measures as a recording bit rate a decreasing amount per unit time of a residual capacity of the data storage (1-9);
   a recording bit rate monitor (1-7) which monitors the recording bit rate measured by the recording bit rate measuring unit (1-8) as a state variable, determines whether or not the state variable changes based on a predetermined reference, and outputs an event issue request if it is determined that the state variable changes; and
   an event processor (1-6) which sends an event notification showing a state change from the communication unit (1-2) to the other apparatus (1-20) based on the event issue request from the recording bit rate monitor (1-7).

2. The apparatus according to claim 1, **characterized in that** the recording bit rate monitor (1-7) determines that the state variable changes if a change of recoding bit rate measured by the recording bit rate measuring unit (1-8) exceeds a predetermined range.

3. The apparatus according to claim 1, **characterized by** further comprising:

   a first action processor (1-4) which sets a determination reference made by the recording bit rate monitor (1-7) to a new reference when receiving an action request from the other apparatus (1-20) via the communication unit (1-2), the action request concerning newly setting a reference for judging whether or not the state variable changes, wherein
the recording bit rate monitor (1-7) determines whether or not the state variable changes based on the new reference.

4. The apparatus according to claim 1, **characterized by** further comprising:

   a second action processor (1-4) which acquires and notifies a state variable value from the recording bit rate monitor (1-7) when receiving an action request from the other apparatus (1-20) via the communication unit (1-2), the action request concerning requesting the state variable value expressing a current bit rate.

5. The apparatus according to claim 1, **characterized by** further comprising:

   a third action processor (1-4) which acquires a current bit rate and a determination reference value from the recording bit rate monitor (1-7) when receiving an action request of detailed information on data from other apparatus, and generates and notifies property based on the acquired value.

6. The apparatus according to claim 1, **characterized in that** the event processor (1-6) sends an event notification described in an XML format conformable to UPnP standard.

7. A network apparatus (1-20) making an information exchange with other apparatus (1-1) on a network, **characterized by** comprising:

   an event processor (1-20-2) which makes an event issue with respect to the other apparatus (1-1), and receives an event notification from the other apparatus (1-1);
   a data storage (1-20-5) which stores data;
   a transmitter which transmits the data stored in the data storage to other apparatus (1-1);
   a data transmitter (1-20-4) which instructs a start of data transmission and an end of data transmission from the transmitter (1-20) to the other apparatus (1-1) ; and
   a recording bit rate interpreter (1-20-3) which detects a change of the recording bit rate of the other apparatus (1-1) based on an event notification from the other apparatus (1-1), and predicts whether or not data transmission to the other apparatus (1-1) by the data transmitter (1-20) is completed.

8. The apparatus according to claim 7, **characterized in that** the recording bit rate interpreter (1-20-3) gives instructions to display a caution screen to user with respect to an information display if it is predicted that data transmission to the other apparatus (1-1) by the data transmitter (1-20) is not completed, and gives instructions to stop data transmission with respect to the data transmitter (1-20).

9. The apparatus according to claim 7, **characterized by** further comprising:

a first action processor (1-20-8) which makes an action request to newly set a reference that the other apparatus (1-1) determines whether or not a state variable changes.

10. The apparatus according to claim 7, **characterized by** further comprising:

a second action processor which makes an action request of a state variable expressing a current recording bit rate of the other apparatus (1-1) with respect to other apparatus (1-1).

11. The apparatus according to claim 7, **characterized by** further comprising:

a third action processor which makes an action request of detailed information on data with respect to the other apparatus (1-1).

12. The apparatus according to claim 7, **characterized in that** the event processor (1-20-2) handles an event notification described in an XML format conformable to UPnP standard.

13. A data recording method **characterized by** comprising:

storing data in a data storage (1-1);
measuring by a recording bit rate measuring unit (1-8) a decreasing amount per unit time of a residual capacity of the data storage (1-9) as a recording bit rate;
monitoring by a recording bit rate monitor (1-7) the bit recording bit rate measured by the recording bit rate measuring unit (1-8) as a state variable, determining whether or not the state variable changes based on a predetermined reference, and outputting an event issue request if it is determined that the state variable changes; and
sending by an event processor (1-6) an event notification showing a state change from the communication unit (1-2) to the other apparatus (1-20) based on the event issue request from the recording bit rate monitor (1-7).

14. The method according to claim 13, **characterized in that** the recording bit rate monitor (1-7) determines that the state variable changes if a change of bit rate measured by the recording bit rate measuring unit (1-8) exceeds a predetermined range.

15. The method according to claim 13, **characterized by** further comprising:

setting by a first action processor (1-4) a determination reference made by the recording bit rate monitor (1-7) to a new reference when receiving an action request form the other apparatus (1-20) via the communication unit (1-2), the action request concerning newly setting a reference for judging whether or not the state variable changes, wherein
the recording bit rate monitor (1-7) determines whether or not the state variable changes based on the new reference.

16. The method according to claim 13, **characterized by** further comprising:

acquiring and notifying by a second action processor (1-4) a state variable value from the recording bit rate monitor (1-7) when receiving an action request from the other apparatus (1-20) via the communication unit (1-2), the action request concerning requesting the state variable value expressing a current bit rate.

17. The apparatus according to claim 13, **characterized by** further comprising:

acquiring by a third action processor (1-4) a current bit rate and a determination reference value from the recording bit rate monitor (1-7) when receiving an action request of detailed information on data from other apparatus (1-20), and generating and notifying property based on the acquired value.

18. The method according to claim 13, **characterized in that** the event processor (1-6) sends an event notification described in an XML format conformable to UPnP standard.

FIG. 1

Start

S1-1

Assign value acquired from recording
bit rate measuring unit to Br_now

S1-2

$| Br-Br\_now | > Gap$

NO

YES

S1-3

Assign Br_now to Br

S1-4

Update state variable

S1-5

Make event issue request to event
processor

End

# FIG. 2

```
<serviceStateTable>
        ...
        <stateVariable sendEvents="yes">
                <name>X_RecordingBitrate</name>
                <dataType>string</dataType>
        </stateVariable>
        ...
</serviceStateTable>
```

FIG. 3

```
<?xml version="1.0"?>
<e:propertyset xmlns:e="urn:schemas-upnp-org:event-1-0">
        <e:property>
                <X_RecordingBitrate>15,100000bps</X_RecordingBitrate>
        </e:property>
</e:propertyset>
```

FIG. 4

FIG. 5

**FIG. 6**

```
<actionList>
...
<action>
  <name>X_SetRecordingBitrateGap</name>
  <argumentList>
    <argument>
      <name>Gap</name>
      <direction>in</direction>
      <relatedStateVariable>X_ARG_TYPE_RecordingBitrateGap</relatedStateVariable>
    </argument>
  </argumentList>
</action>
...
</actionList>
<serviceStateTable>
...
  <stateVariable sendEvents="no">
    <name> X_ARG_TYPE_RecordingBitrateGap</name>
    <dataType>string</dataType>
  </stateVariable>
  <stateVariable sendEvents="yes">
    <name>X_RecordingBitrate</name>
    <dataType>string</dataType>
  </stateVariable>
...
</serviceStateTable>
```

Start

S7-1

Receive X_SetRecordingBitrateGap
action request

S7-2

Analyze input variable Gap

S7-3

Error ?　　　YES

NO

S7-4

Input variable
Gap and Gap are the same
value ?　　YES

NO

S7-5

Assign input variable Gap value
to Gap

S7-6

Recalculate current state variable
using Gap value to generate new
state variable

S7-7

Make event issue request

S7-9

Return error response

S7-8

Return success response

End

FIG.7

```
<action>
   <name>X_GetCurrentRecordingBitrate</name>
   <argumentList>
     <argument>
        <name>CurrentRecordingBitrate</name>
        <direction>out</direction>
        <relatedStateVariable>X_RecordingBitrate</relatedStateVariable>
     </argument>
   </argumentList>
</action>
...
</actionList>
<serviceStateTable>
...
   <stateVariable sendEvents="yes">
      <name>X_RecordingBitrate</name>
      <dataType>string</dataType>
   </stateVariable>
...
</serviceStateTable>
```

FIG.8

```
<?xml version="1.0"?>
<s:Envelope xmlns:s="http://schemas.xmlsoap.org/soap/envelope/"
  s:encodingStyle="http://schemas.xmlsoap.org/soap/encoding/">
   <s:Body>
      <u:actionNameResponse xmlns:u="urn:schemas-upnp-org:service:
      ContentDirectory:1">
         <X_RecordingBitrate>15,100000bps</X_RecordingBitrate>
      </u:actionNameResponse>
   </s:Body>
</s:Envelope>
```

FIG.9

_1-1_

Recorder

_1-2_

_1-4_

Action
processor

_1-20_

Client

TCP/IP
network I/F
processor

_1-6_

Event
processor

_1-7_

Recording bit rate
monitor

_1-8_

Recording bit rate
measuring unit

_1-3_

HTTP server
POST method
processor

_1-9_

Content storage

F I G. 10

EP 1 806 750 A1

```
<DIDL-Lite xmlns:dc="http://purl.org/dc/elements/1.1/"
 xmlns:upnp="urn:schemas-upnp-org:metadata-1-0/upnp/"
 xmlns="urn:schemas-upnp-org:metadata-1-0/DIDL-Lite/">
    <container id="0" parentID="-1" childCount="1" restricted="0" searchable="0">
      <dc:title>Root Container</dc:title>
      <upnp:storageTotal>1000000000</upnp:storageTotal>
      <upnp:storageUsed>200000000</upnp:storageUsed>
      <upnp:storageFree>800000000</upnp:storageFree>
      <upnp:storageMaxPartition>-1</upnp:storageMaxPartition>
      <upnp:storageMedium>HDD</upnp:storageMedium>
      <av:RecordingBitrate av:unit="100000pbs" xmlns:av="urn:schemas-toshiba-co-jp:metadata-1-0/av/">
       15
      </av:RecordingBitrate>

      <upnp:class>object.container.storageSystem</upnp:class>
    </container>
</DIDL-Lite>
```

# FIG. 11

FIG. 12

F I G. 13

FIG. 14

```
                    ( Start )

                         │        S21-1
                         ▼
            ┌─────────────────────────────┐
            │ Acquire recording bit rate  │
            │ according to                │
            │ X_GetCurrentRcordingBitrate │
            │ Action                      │
            └─────────────────────────────┘
                         │        S21-2
                         ▼
            ┌─────────────────────────────┐
            │ Acquire transmission content│
            │ capacity                    │
            └─────────────────────────────┘
                         │        S21-3
                         ▼
            ┌─────────────────────────────┐
            │   Start content transmission│
            └─────────────────────────────┘
                         │
                         ▼        S21-4
                    ◇───────────◇
                   ╱   Content    ╲     YES
                  ◇ transmission ended ◇──────►
                   ╲      ?       ╱
                    ◇───────────◇
                         │ NO
                         ▼        S21-5
            ┌─────────────────────────────┐
            │ Acquire recording bit rate  │
            │ according to                │
            │ X_GetCurrentRcordingBitrate │
            │ Action                      │
            └─────────────────────────────┘
                         │        S21-6
                         ▼
          NO        ◇───────────◇
      ◄─────────── ◇  Recording   ◇
                    ◇bit rate changed◇
                     ◇     ?     ◇
                         │ YES
         S21-7           ▼         S21-8
    ┌──────────────┐  ┌──────────────────┐
    │ Calculate    │  │ Calculate time T2│
    │ transmission │  │ at which free    │
    │ completed    │  │ capacity is used │
    │ time T1      │  │ up               │
    └──────────────┘  └──────────────────┘
                         │        S21-9
          NO        ◇───────────◇
      ◄─────────── ◇   T2<T1 ?   ◇
                    ◇───────────◇
                         │ YES
                         ▼        S21-10
            ┌─────────────────────────────┐
            │     Give caution to user    │
            └─────────────────────────────┘
                         │        S21-11
                         ▼
            ┌─────────────────────────────┐
            │      Stop transmission      │
            └─────────────────────────────┘
                         │
                         ▼
                    ( End )
```

FIG. 15

FIG.16

**European Patent Office**

## EUROPEAN SEARCH REPORT

Application Number

EP 06 12 7278

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2005/041486 A (KONINKL PHILIPS ELECTRONICS NV [NL]; VAN GASSEL JOZEF P [NL]; LI HONG) 6 May 2005 (2005-05-06) * the whole document * ----- | 1-18 | INV.<br>G11B27/36<br>H04N5/76<br>H04L12/28 |
| X | EP 1 431 979 A1 (SONY CORP [JP]) 23 June 2004 (2004-06-23) * paragraphs [0017] - [0045] * ----- | 1-18 | |
| A | WO 2005/067300 A (KONINKL PHILIPS ELECTRONICS NV [NL]; PINA JEAN-BENOIT [FR]) 21 July 2005 (2005-07-21) * the whole document * ----- | 1-18 | |
| A | WO 2004/100539 A (THOMSON LICENSING SA [FR]; MEARS MARK GILMORE [US]; CARLSGAARD ERIC ST) 18 November 2004 (2004-11-18) * page 5, lines 13-29 * ----- | 1-18 | |
| | | | **TECHNICAL FIELDS SEARCHED (IPC)**<br><br>G11B<br>H04N<br>H04L |

The present search report has been drawn up for all claims

| Place of search | Date of completion of the search | Examiner |
|---|---|---|
| The Hague | 2 May 2007 | Mourik, Piet |

EPO FORM 1503 03.82 (P04C01)

**EP 1 806 750 A1**

## ANNEX TO THE EUROPEAN SEARCH REPORT
## ON EUROPEAN PATENT APPLICATION NO.

EP 06 12 7278

This annex lists the patent family members relating to the patent documents cited in the above-mentioned European search report.
The members are as contained in the European Patent Office EDP file on
The European Patent Office is in no way liable for these particulars which are merely given for the purpose of information.

02-05-2007

| Patent document cited in search report | | Publication date | Patent family member(s) | | Publication date |
|---|---|---|---|---|---|
| WO 2005041486 | A | 06-05-2005 | CN<br>KR | 1871820 A<br>20060094975 A | 29-11-2006<br>30-08-2006 |
| EP 1431979 | A1 | 23-06-2004 | CN<br>WO<br>JP<br>US | 1476614 A<br>03030174 A1<br>2003110988 A<br>2004141724 A1 | 18-02-2004<br>10-04-2003<br>11-04-2003<br>22-07-2004 |
| WO 2005067300 | A | 21-07-2005 | CN | 1902934 A | 24-01-2007 |
| WO 2004100539 | A | 18-11-2004 | BR<br>CN<br>EP<br>JP<br>KR | PI0410019 A<br>1784892 A<br>1621012 A1<br>2006525770 T<br>20050120723 A | 25-04-2006<br>07-06-2006<br>01-02-2006<br>09-11-2006<br>22-12-2005 |

For more details about this annex : see Official Journal of the European Patent Office, No. 12/82

**EP 1 806 750 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2005006199 A
- JP 11328937 A
- JP 2002033982 A